# DEMANDE DE BREVET EUROPEEN

(11) **EP 3 672 114 A1**
(43) Date de publication de la demande: **24.06.2020**
(21) Numéro de dépôt: 18215635.6
(22) Date de dépôt: 21.12.2018
(51) Int. Cl.: H04B 13/00, B41C 1/04, G04B 45/00

(54) **PROCEDE ET SYSTEME DE TRANSMISSION D'AU MOINS UN MESSAGE PAR L'INTERMEDIAIRE D'UNE PIECE D'HORLOGERIE**

(71) Demandeur: Montres Rado S.A., 2543 Lengnau (CH)
(72) Inventeur: NAVA, Sergio, 23900 Lecco (LC) (IT); FUMAGALLI, Daniele, 23842 Bosisio Parini (LC) (IT); RONZONI, Lorenzo, 20822 Seveso (MB) (IT)
(74) Mandataire: ICB SA

(57) **Abrégé**

L'invention concerne un procédé de transmission d'au moins un message par l'intermédiaire d'une pièce d'horlogerie (100), le procédé comprenant les étapes suivantes :
- création (21) du message à transmettre par un premier dispositif électronique (3a) d'un premier utilisateur à partir de données numériques du message notamment résultant d'un traitement d'un flux audio (11a) et/ou d'un flux lumineux capturé par ce premier dispositif électronique (3a) ;
- génération (24) d'une représentation graphique numérique de référence (12) comprenant un identifiant dudit message ;
- réalisation (30) d'une représentation graphique (17) relative à ladite représentation graphique numérique de référence (12) sur/dans une zone de support (18) dudit message définie sur tout ou partie de la pièce d'horlogerie (100), et
- diffusion (38) dudit message par un deuxième dispositif électronique (3b) d'un deuxième utilisateur à partir de ladite représentation graphique (17) comprise sur la pièce d'horlogerie (100).

## Description

### Domaine de l'invention

L'invention porte sur un procédé de transmission d'au moins un message par l'intermédiaire d'une pièce d'horlogerie et sur un système mettant en oeuvre un tel procédé.

L'invention porte également sur un programme d'ordinateur comprenant des instructions de code de programme pour l'exécution des étapes de ce procédé.

### Arrière-plan de l'invention

Dans l'état de la technique, différents procédés participent à la transmission d'un message par l'intermédiaire d'une pièce d'horlogerie. On connaît par exemple des procédés consistant à imprimer un tel message sur une partie de la pièce d'horlogerie telle que le bracelet afin que le porteur à qui est destiné le message en prenne connaissance dès lors qu'il est en possession de cette dernière. On connaît également, d'autres procédés visant à transmettre ce message par l'intermédiaire d'un écran compris dans une partie constitutive de la pièce d'horlogerie par exemple le cadran, de tels procédés mettant en oeuvre pour la diffusion de ce message des technologies de télécommunication entre un serveur distant et ladite pièce pourvue de cet écran.

Toutefois de tels procédés présentent un inconvénient majeur lié à la sécurité et la confidentialité dans la transmission d'un tel message. En effet, d'autres individus que le porteur de la pièce d'horlogerie, peuvent également prendre connaissance de ce message dès lors qu'ils sont en possession de cette pièce d'horlogerie.

### Résumé de l'invention

Un des buts de la présente invention est de pallier tout ou partie des inconvénients cités précédemment en fournissant un procédé et un système assurant une confidentialité et une sécurité optimales dans le cadre de la transmission d'un message par l'intermédiaire d'une pièce d'horlogerie.

A cet effet, l'invention porte sur un procédé de transmission d'au moins un message par l'intermédiaire d'une pièce d'horlogerie, le procédé comprenant les étapes suivantes :
- création du message à transmettre par un premier dispositif électronique d'un premier utilisateur à partir de données numériques du message notamment résultant d'un traitement d'un flux audio et/ou d'un flux lumineux capturé par ce premier dispositif électronique ;
- génération d'une représentation graphique numérique de référence comprenant un identifiant dudit message ;
- réalisation d'une représentation graphique relative à ladite représentation graphique numérique de référence sur/dans une zone de support dudit message définie sur tout ou partie de la pièce d'horlogerie, et
- diffusion dudit message par un deuxième dispositif électronique d'un deuxième utilisateur à partir de ladite représentation graphique comprise sur la pièce d'horlogerie.

Ainsi grâce à ces caractéristiques, le message est alors rendu accessible uniquement à partir d'un identifiant associé à ce message, lequel identifiant est compris sur/dans la zone de support de la pièce d'horlogerie pour une diffusion sécurisée et confidentielle de ce message au porteur de cette pièce à partir d'un dispositif électronique en sa possession.

Dans d'autres modes de réalisation :
- l'étape de génération comprend une sous-étape de sélection à partir d'une interface homme-machine du premier dispositif électronique d'un modèle de représentation graphique numérique parmi différents modèles affichés sur un module d'affichage de ce premier dispositif électronique ;
- l'étape de génération comprend une sous-étape d'application de critères de modification à au moins un paramètre descriptif de la représentation graphique numérique sélectionnée ;
- l'étape de diffusion comprend une sous-étape de numérisation de la représentation graphique réalisée sur/dans la zone de support à partir du deuxième dispositif électronique ;
- l'étape de diffusion comprend une sous-étape d'identification du message à diffuser ;
- l'étape de diffusion comprend une sous-étape de transmission au deuxième dispositif électronique des données numériques du message relatives audit message identifié ;
- l'étape de réalisation comprend une sous-étape de génération par une unité de contrôle du serveur d'au moins une instruction de pilotage d'un dispositif de construction de ladite représentation graphique en fonction de caractéristiques descriptives de la représentation graphique numérique de référence ;
- l'étape de réalisation comprend une sous-étape d'édification de la représentation graphique sur/dans la zone de support, ladite sous-étape mettant en oeuvre un processus de retrait de matière dans cette zone de support et/ou un processus de dépôt d'au moins une couche de matière sur cette zone de support ;
- le procédé comprend une étape de construction de la pièce d'horlogerie comportant une sous-étape d'assemblage d'un ensemble de composants constituant ladite pièce d'horlogerie dont fait partie ledit au moins un composant comprenant la zone de support pourvue de la représentation graphique ;
- la zone de support est définie sur un seul composant de la pièce d'horlogerie notamment un cadran de la pièce d'horlogerie ;
- la zone de support est définie sur plusieurs composants distincts de la pièce d'horlogerie ;
- ledit au moins un message est du type audio et/ou vidéo ou encore graphique,
- la représentation graphique est de type bidimensionnelle ou tridimensionnelle.

L'invention porte aussi sur un système de transmission d'au moins un message par l'intermédiaire d'une pièce d'horlogerie, mettant en oeuvre le procédé, le système comprenant des premier et deuxième dispositifs électroniques, un serveur comportant une base de données pourvue d'au moins un modèle de représentation graphique numérique et un dispositif de construction de représentation graphique sur/dans une zone de support du message définie sur tout ou partie de la pièce d'horlogerie, les premier et deuxième dispositifs électroniques et le dispositif de construction de représentation graphique étant connectés audit serveur.

L'invention porte également sur une pièce d'horlogerie comprise dans un tel système, comportant une zone de support du message pourvue d'une représentation graphique comprenant un identifiant de ce message.

L'invention porte en outre sur un programme d'ordinateur comprenant des instructions de code de programme pour l'exécution des étapes du procédé lorsque ledit programme est exécuté par des unités de contrôle et de traitement de respectivement du serveur et des premier et deuxième dispositifs électroniques.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'un système de transmission d'au moins un message par l'intermédiaire d'une pièce d'horlogerie, selon un mode de réalisation de l'invention ;
- la figure 2 est un logigramme relatif à un procédé de transmission dudit au moins un message par l'intermédiaire de la pièce d'horlogerie, selon un mode de réalisation de l'invention, et
- la figure 3 représente la pièce d'horlogerie qui apte à participer à la transmission dudit au moins un message, selon un mode de réalisation de l'invention

### Description détaillée des modes de réalisation préférés

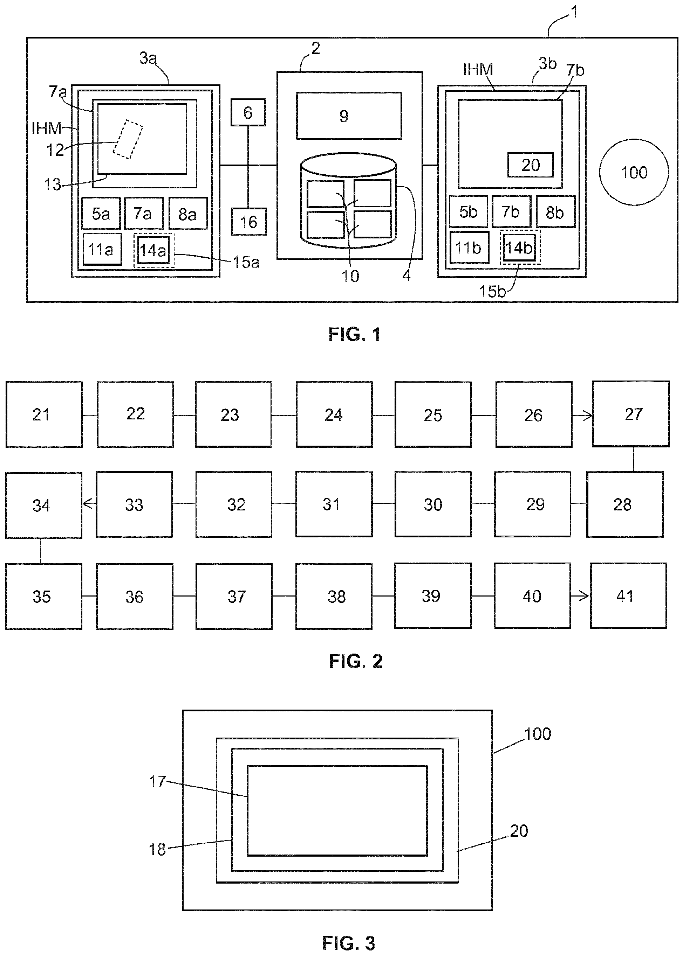

- En référence à la figure 1, le système de transmission 1 d'au moins un message par l'intermédiaire d'une pièce d'horlogerie 100 comprend :
- des premier et deuxième dispositifs électroniques 3a, 3b ;
- un serveur 2 comportant une base de données 4 pourvue d'une pluralité de modèles de représentation graphique numérique 10 et de paramètres descriptifs associés à chacun de ces modèles 10 ;
- un dispositif de construction 6 d'une représentation graphique 17 sur la pièce d'horlogerie 100, et
- une architecture réseau sans fil et/ou filaire reliant les premier et deuxième dispositifs électroniques 3a, 3b et le serveur 2 entre eux ainsi que ce serveur 2 avec le dispositif de construction 6.

Un tel système 1 permet ainsi à un premier utilisateur de ce système 1 à transmettre à un deuxième utilisateur porteur de la pièce d'horlogerie, un message réalisé à partir notamment du premier dispositif électronique 3a. Un tel message est diffusé par le deuxième dispositif électronique 3b du deuxième utilisateur en étant rendu accessible à partir d'une représentation graphique 17 présente sur tout ou partie de la pièce d'horlogerie 100. Une telle pièce d'horlogerie 100 visible sur la figure 3, peut être une pièce d'horlogerie 100 pour la transmission d'au moins un message ou encore une pièce d'horlogerie 100 apte à participer à la transmission dudit au moins un message.

Dans ce système, ce serveur 2 comprend donc la base de données 4, une unité de contrôle 9 ainsi qu'une unité de communication. Ainsi que nous l'avons évoqué précédemment, ce serveur 2 comprend une pluralité de modèles de représentation graphique numérique 10. Chaque modèle de représentation graphique numérique 10 autrement appelé plus simplement « représentation graphique numérique », peut être une représentation graphique numérique bidimensionnelle 2D ou tridimensionnelle 3D. Ce modèle de représentation graphique numérique 10 peut être généré par un module de conception du système 1 qui est relié à l'unité de contrôle 9 du serveur 2 pouvant comprendre un dispositif de numérisation bidimensionnelle/tridimensionnelle. Ce modèle 10 peut aussi être généré par un outil logiciel exécuté par l'unité de contrôle 9, un tel outil permettant une modélisation virtuelle à partir de photographies, d'images ou d'objets, ou encore de concevoir un objet numérique virtuel (par exemple un logiciel de conception assistée par ordinateur plus connue sous l'acronyme CAO).

Ainsi que nous l'avons évoqué précédemment, chaque modèle de représentation graphique numérique 10 est associé à des paramètres descriptifs. Ces paramètres descriptifs définissent notamment l'aspect/l'apparence visuel du modèle de représentation graphique numérique 10. Dans ce contexte, ces paramètres descriptifs comprennent de manière non limitative et non exhaustive :
- une forme du ou des objets graphiques bidimensionnels et/ou tridimensionnels constituant la représentation graphique numérique 10, cette forme peut être une forme géométrique du type cercle, sphère, ellipse, cône, cylindre, tronc de cône, triangle, polyèdre, une combinaison d'au moins deux formes géométriques différentes ou similaires, etc... ;
- des dimensions du ou des objets graphiques bidimensionnels et/ou tridimensionnels constituant la représentation graphique numérique 10, ces dimensions peuvent correspondre à une épaisseur, une largeur, une longueur, profondeur, une surface, un volume, etc... ;
- une ou des couleurs constituant chaque objet graphiques bidimensionnel et/ou tridimensionnel ;
- une texture constituant la ou les faces de chaque objet graphiques bidimensionnel et/ou tridimensionnel ;
- une position relative aux différents objets graphiques bidimensionnels et/ou tridimensionnels entre eux lorsque la représentation graphique numérique 10 comprend plusieurs de ces objets.

Dans ce serveur 2, l'unité de contrôle 9 comprend des ressources matérielles et logicielles en particulier au moins un processeur coopérant avec des éléments de mémoire. Cette unité de contrôle 9 est apte à exécuter des instructions pour la mise en oeuvre d'un programme d'ordinateur visant par exemple à assurer la gestion de la base de données 4 du serveur 2, le pilotage du dispositif de construction 6 et/ou encore le traitement des requêtes/instructions/données provenant/transmises du/vers les premier et deuxième dispositifs électroniques 3a, 3b notamment du/vers leur unité de traitement 5a, 5b.

On notera que l'unité de contrôle 9 est connectée au dispositif de construction 6 et aux premier et deuxième dispositifs électroniques 3a, 3b par l'intermédiaire de l'unité de communication du serveur 2. Une telle unité de communication est apte à mettre en oeuvre des protocoles de communication sécurisés au sein de l'architecture réseau de ce système 1.

Dans ce système 1, les premier et deuxième dispositifs électroniques 3a, 3b peuvent être par exemple un ordinateur, un ordiphone, un smartphone, une tablette, ou encore une borne électronique. De tels premier et deuxième dispositifs électroniques 3a, 3b comprennent chacun de manière non limitative ou non exhaustive :
- l'unité de traitement 5a, 5b comportant des ressources matérielles et logicielles en particulier au moins un processeur coopérant avec des éléments de mémoire ;
- un module d'affichage 7a, 7b de type écran visible sur la figure 1 et affichant une représentation visuelle de données d'information 13 ;
- une interface de diffusion d'une information sonore telle qu'un haut-parleur ;
- une interface de communication permettant d'établir une liaison de communication entre l'unité de traitement 5a, 5b et l'unité de contrôle 9 du serveur 2 pour la réalisation d'échange de données ;
- une interface de sélection 8a, 8b tel qu'un clavier ou encore une interface tactile comprise par exemple dans le module d'affichage 7a, 7b,
- au moins un module de capture d'un flux audio 11a, 11b comprenant au moins un microphone ;
- au moins un module de capture d'un flux lumineux 14a, 14b également appelé module de capture d'au moins une image comprenant notamment un capteur d'images du type par exemple capteurs matriciels CCD (pour « Charged Coupled Device » en anglais) ou encore CMOS (pour « Complementary Metal-Oxide-Semiconductor » en anglais)
- un module de numérisation 15a, 15b encore appelé module de scannage, pouvant comprendre ledit au moins un module de capture d'un flux lumineux 14a, 14b, et
- une interface homme-machine IHM.

Dans chacun de ces deux dispositifs électroniques 3a, 3b, l'unité de traitement 5a, 5b est reliée entre autres au module d'affichage 7a, 7b, à l'interface de diffusion, à l'interface de communication, à l'interface de sélection 8a, 8b et à l'interface homme-machine IHM. Cette unité de traitement 5a, 5b est notamment apte à exécuter des instructions pour la mise en oeuvre du programme d'ordinateur visant par exemple à assurer le traitement des requêtes/instructions/données provenant/transmises :
- du/vers le serveur 2, notamment du/vers son unité de contrôle 9, et/ou
- du/vers l'interface homme-machine IHM.

L'interface homme-machine IHM de chacun de ces deux dispositifs électroniques 3a, 3b comprend notamment l'unité de traitement 5a, 5b, le module d'affichage 7a, 7b, les modules de capture de flux lumineux et audio 14a, 14b, 11a, 11b, et l'interface de sélection 8a, 8b avec laquelle un utilisateur du dispositif électronique 3 peut agir. En particulier, concernant notamment le premier dispositif électronique 3a mais pas exclusivement, l'interface homme-machine IHM comprend tout moyen technique et cognitif intervenant depuis la génération de la représentation visuelle de données d'information 13 contenant notamment des informations relatives aux modèles de représentation graphique numérique 10 archivées dans la base de données 4 du serveur 2 en vue de leur affichage sur le module d'affichage 7a, jusqu'à une sélection d'abord d'un des modèles de représentation graphique numérique 10 à partir de l'interface de sélection 8a du premier dispositif électronique 3a, et ensuite une réalisation d'une représentation graphique numérique de référence 12 résultant du traitement notamment dudit au moins un message et du modèle de représentation graphique numérique 10. Dans ce contexte, cette représentation graphique numérique de référence 12 sert de base à la réalisation de la représentation graphique 17 sur/dans une zone de support 18 d'au moins un message de la pièce d'horlogerie 100. Dans ce contexte et ainsi que nous l'avons évoqué précédemment, une telle interface IHM comprend l'unité de traitement 5a du dispositif électronique 3a qui est notamment apte à générer la représentation visuelle de données d'information 13 provenant du serveur 2, le module d'affichage 7a à afficher la représentation visuelle de données d'information 13, l'interface de sélection 8a avec laquelle le premier utilisateur du dispositif électronique 3a peut agir ainsi que les modules de capture de flux lumineux et audio 14a, 14b, 11a, 11b qui participent à la réalisation de la représentation graphique numérique de référence 12. On notera que dans ce mode de réalisation de l'invention, la représentation visuelle de données d'information 13 résulte notamment d'un flux de données de contenu et de données d'application Web provenant du serveur 2. Les données de contenu telles que les modèles de représentations graphiques numériques 10 et les paramètres descriptifs, sont ici comprises dans des fichiers numériques multimédias archivés dans la base de données 4 du serveur 2. S'agissant des données d'application web, elles permettent de participer notamment à la manipulation des données de contenu ici dans ce cas par l'intermédiaire d'un outil de navigation web susceptible de comprendre un module d'extension d'affichage de représentation graphique numérique 10 2D ou 3D de type « WebGL » et de l'interface homme-machine IHM. On comprend ici que les données de contenu et d'application web sont archivées dans la base de données 4 du serveur 2.

Ainsi que nous l'avons évoqué précédemment, la base de données 4 du serveur 2 archive des données de contenu telles que la pluralité de modèles de représentation graphique numérique 10 dont un de ces derniers peut être préalablement sélectionné pour être modifié afin d'obtenir la représentation graphique numérique de référence 12 susceptible d'être reproduite sur/dans la zone de support 18 de la pièce d'horlogerie 100 à partir notamment du dispositif de construction 6.

Un tel dispositif de construction 6 visible sur la figure 1, comprend :
- un organe de retrait de matière, et/ou
- un organe de dépôt de matière, un organe de fixation et un organe d'entrainement.

Dans ce contexte, l'organe de retrait de matière comprend de préférence un élément d'usinage fonctionnant selon les différentes techniques d'usinages connues dans l'état de l'art afin de réaliser une représentation graphique 17 bidimensionnelle 2D ou tridimensionnelle 3D.

Dans ce dispositif de construction 6, l'organe de dépôt de matière peut permettre d'appliquer de la matière sur la zone de support 18 du composant 20 de la pièce d'horlogerie 100 de préférence par impression afin de réaliser la représentation graphique 17 bidimensionnelle 2D ou tridimensionnelle 3D. Dans ce contexte, un tel organe de dépôt comprend plusieurs entités d'impression notamment des cartouches d'impression à jet de matière en particulier à jet d'encre. Dans le présent mode de réalisation, chaque cartouche comprend au moins une tête d'impression et au moins un réservoir. Dans ces cartouches, la matière peut être colorée en comprenant une encre colorée comportant des particules pigmentées, et/ou présenter des propriétés fonctionnelles. De telles propriétés fonctionnelles peuvent porter sur des caractéristiques fonctionnelles physiques et/ou chimiques de cette matière qui sont liées par exemple à :
- l'électroluminescence ;
- la photoluminescence (par exemple une réaction à un rayonnement ultraviolet) ;
- la phosphorescence,
- « X-chromisme » (photochrome, électrochrome, thermochrome, ionochrome, mécanochrome...),
- etc...

Dans ce dispositif de construction 6, l'organe d'entrainement est apte à provoquer le déplacement de l'organe de dépôt de matière et/ou de retrait de matière dans différentes directions relativement à au moins un composant 20 de la pièce d'horlogerie 100 susceptible de comprendre la zone de support 18 sur laquelle doit être réalisée la représentation graphique 17. En effet, cette zone de support 18 peut être définie sur un seul composant 20 de cette pièce d'horlogerie 100, par exemple le cadran ou encore sur plusieurs composants 20 tels que le réhaut et le cadran. On notera que la zone de support 18 est de préférence définie sur tout ou partie dudit au moins un composant 20 qui est visible lorsque la pièce d'horlogerie 100 est portée par le deuxième utilisateur ici le porteur de ladite pièce d'horlogerie 100. Dans le présent mode de réalisation, cette zone de support 18 est définie par exemple sur une partie d'une face visible du cadran.

S'agissant de l'organe de fixation, il est prévu pour assurer la fixation d'au moins une couche de la matière sur cette zone de support 18, ou sur une première couche ou couche initiale de matière déjà présente sur cette zone 18. Cet organe de fixation comprend un module susceptible d'émettre un rayonnement ultraviolet UV et/ou infrarouge et/ou un flux d'air notamment un flux d'air chaud. Ce module est apte à générer un rayonnement ou un flux d'air sur tout ou partie de la zone de support 18.

En outre, on notera que le système 1 comprend un élément de support 16 prévu pour recevoir ledit au moins un composant 20 de la pièce d'horlogerie 100 susceptible de comprendre la zone de support 18 en prévision du dépôt ou du retrait de matière.

En référence à la figure 2, ce système 1 met en oeuvre un procédé de transmission d'au moins un message par l'intermédiaire de la pièce d'horlogerie 100.

Un tel procédé comprend une étape de création 21 du message à transmettre par le premier dispositif électronique 3a du premier utilisateur à partir de données numériques du message notamment résultant d'un traitement d'un flux audio et/ou d'un flux lumineux capturé par ce premier dispositif électronique 3a. Cette étape 21 mise en oeuvre par le premier dispositif 3a, comprend une sous-étape de génération 22 des données numériques du message à partir du traitement par exemple :
- d'un flux audio correspondant à un message sonore qui est enregistré au moyen d'au moins un module de capture d'un flux audio 11a et de l'unité de traitement 5a du premier dispositif électronique 3a ;
- d'un flux lumineux correspondant à un message de type photographique bidimensionnel ou tridimensionnel, ou de type graphique bidimensionnel ou tridimensionnel qui est enregistré au moyen d'au moins un module de capture d'un flux lumineux 14a et de l'unité de traitement 5a du premier dispositif électronique 3a ;
- d'un flux lumineux correspondant à un message de type vidéo bidimensionnel ou tridimensionnel qui est enregistré au moyen d'au moins un module de capture d'un flux lumineux 14a et de l'unité de traitement 5a du premier dispositif électronique 3a, ou
- des flux audio et lumineux simultanés correspondant à un message audio-vidéo qui sont enregistrés au moyen des modules de capture d'un flux lumineux 14a et d'un flux audio 11a ainsi que de l'unité de traitement 5a du premier dispositif électronique 3a.

Dans ce contexte, les flux audio et/ou vidéo sont donc capturés par le premier dispositif électronique 3a susceptible d'être contrôlé/piloté par le premier utilisateur et ce, dans l'optique de définir le type et le contenu du message qu'il souhaite transmettre au deuxième utilisateur.

Par la suite, l'étape de création 21 comprend également une sous-étape d'archivage 23 de ces données numériques du message sous la forme d'un fichier numérique dans la base de données 4 du serveur 2.

Le procédé prévoit ensuite une étape de génération 24 d'une représentation graphique numérique de référence 12 comprenant un identifiant dudit message. On notera ici que la représentation graphique numérique 12 est dite de référence car elle sert de base par la suite à la réalisation de la représentation graphique 17 comprenant cet identifiant du message sur/dans la zone de support 18 de la pièce d'horlogerie 100. Une telle étape 24 prévoit en particulier l'élaboration de cette représentation graphique numérique de référence 12 qui dans une première variante peut constituer l'identifiant du message ou dans une deuxième variante intégrer un tel identifiant du message. Dans cette deuxième variante, l'identifiant du message relatif aux données numériques précédemment générées, est alors préalablement créé par l'unité de traitement 5a du premier dispositif électronique 3a et/ou par l'unité de contrôle 9 du serveur 2. Par la suite, cet identifiant du message est intégré dans la représentation graphique numérique de référence 12 lors d'une exécution par l'unité de traitement 5a du premier dispositif électronique 3a et/ou par l'unité de contrôle 9 du serveur 2 d'un algorithme de codage adapté.

Une telle étape de génération 24, comprend une sous-étape de sélection 25 à partir de l'interface homme-machine IHM du premier dispositif électronique 3a, d'un modèle de représentation graphique numérique 10 choisi parmi les différents modèles 10 affichés sur le module d'affichage 7a de ce premier dispositif électronique 3a. Cette étape 24 comprend aussi une sous-étape de production 26 de données spécifiques auxdites données numériques du message. Lors de cette sous-étape 26, un traitement mis en oeuvre par l'unité de traitement 5a du premier dispositif électronique 3a et/ou par l'unité de contrôle 9 du serveur 2, est alors appliqué à ces données numériques du message afin d'identifier les données spécifiques comprises dans ces données numériques. Lorsque les données numériques du message résultent de messages de type audio et/ou vidéo ou encore photographique ayant un contenu comprenant des caractéristiques biométriques relatives au premier utilisateur par exemple sa voix et/ou ses caractéristiques physiques, physiologiques ou comportementales, alors le traitement appliqué à ces données numériques permet d'identifier ces données spécifiques comprenant ces caractéristiques biométriques.

Par la suite, cette étape 24 comprend une sous-étape de conversion 27 par l'unité de traitement 5a et/ou l'unit de contrôle 9, de ces données spécifiques en des critères de modification de la représentation graphique numérique 10 sélectionnée. De tels critères de modification sont définis pour modifier au moins un paramètre descriptif du modèle de représentation graphique numérique 10 sélectionné, les données numériques du message lors d'une sous-étape d'application 28 de ces critères de modification à au moins un paramètre descriptif de ce dit modèle de représentation graphique numérique 10. Une telle sous-étape d'application 28 de l'étape de génération 24 mise en oeuvre par l'unité de traitement 5a et/ou l'unit de contrôle 9, permet alors de faire varier par exemple la forme du ou des objets graphiques bidimensionnels et/ou tridimensionnels constituant ce modèle de représentation graphique numérique 10, les dimensions du ou de ces objets graphiques, la ou leurs couleurs, la ou leurs textures et/ou leurs positions relatives lorsque ce modèle de représentation graphique numérique 10 comprend plusieurs de ces objets. Ainsi ce modèle de représentation graphique numérique 10 en comprenant au moins un paramètre descriptif modifié constitue alors la représentation graphique numérique de référence 12.

Cette représentation graphique numérique de référence 12 ainsi générée qui comprend l'identifiant du message est alors lors de la réalisation d'une étape de stockage 29 archivé dans la base de données 4 du serveur 2 et/ou dans les éléments de mémoire de l'unité de traitement 5a du premier dispositif électronique 3a. Cette représentation graphique numérique de référence 12 est associée dans la base de données 4 aux données numériques du message correspondant. Cette représentation graphique numérique de référence 12 peut également être associée à l'identifiant du message correspondant ou directement aux données numériques de ce message dans le cas de la deuxième variante évoquée précédemment.

Par la suite, le procédé comprend une étape de réalisation 30 de la représentation graphique 17 sur tout ou partie de la pièce d'horlogerie 100. Plus précisément, cette étape 30 comprend une sous-étape d'agencement 31 d'au moins un composant 20 de la pièce d'horlogerie 100 comprenant la zone de support 18 du message sur l'élément de support 16 du système 1 en prévision de la réalisation de la représentation graphique 17 relative à la représentation graphique numérique de référence 12 comprenant l'identifiant du message sur cette zone support 18.

Ensuite, l'étape de réalisation 30 comprend une sous-étape de détermination 32 de caractéristiques descriptives de la représentation graphique numérique de référence 12. Lors de cette sous-étape 32, les caractéristiques descriptives déterminées comprennent par exemple :
- au moins une dimension de cette représentation graphique numérique de référence 12, il peut s'agir par exemple d'une épaisseur, d'une longueur, d'une largueur, d'une surface, d'un volume, etc... ;
- des aspects visuels/esthétiques/structurels c'est-à-dire visuels et/ou esthétiques et/ou structurels de la représentation graphique numérique de référence 12 tels que la couleur et/ou la texture, etc...
- des caractéristiques fonctionnelles physiques et/ou chimiques de la représentation graphique numérique de référence 12, telles que par exemple:
   - l'électroluminescence ;
   - la photoluminescence (par exemple une réaction à un rayonnement ultraviolet) ;
   - la phosphorescence ;
   - « X-chromisme » (photochrome, électrochrome, thermochrome, ionochrome, mécanochrome...) ;
   - etc...

Les caractéristiques descriptives ainsi déterminées sont ensuite archivées dans la base de données 4 du serveur 2.

L'étape de réalisation 30 comprend ensuite une sous-étape de génération 33 par le serveur 2 et en particulier par son unité de contrôle 9, d'au moins une instruction de pilotage du dispositif de construction 6 en fonction des caractéristiques descriptives de ladite représentation graphique numérique de référence 12. Cette dite au moins une instruction comprend des critères de réalisation de la reproduction de la représentation graphique numérique de référence 12 sur/dans la zone de support 18 de la pièce d'horlogerie 100, notamment des critères de pilotage du dispositif de construction 6.

Cette étape 30 prévoit ensuite une sous-étape d'édification 34 de la représentation graphique 17 sur la zone de support 18 du message. Une telle sous-étape d'édification 34 peut prévoir la mise en oeuvre de :
- un processus de retrait de matière par le dispositif de construction 6 dans la zone de support 18 en fonction de ladite au moins une instruction de pilotage, ou
- un processus de dépôt d'au moins une couche de matière sur la zone de support 18 en fonction de ladite au moins une instruction de pilotage.

Lors de ce processus de retrait de matière, le dispositif de construction 6 notamment l'organe de retrait de matière comprenant de préférence un élément d'usinage, est alors piloté par l'unité de contrôle 9 du serveur 2 selon ladite au moins une instruction de pilotage comprenant les critères de réalisation tels que :
- un déplacement de l'organe de retrait relativement à la zone de support 18 pour la reproduction des caractéristiques des aspects visuels/esthétiques/structurels et/ou fonctionnelles d'au moins une dimension de la représentation graphique numérique de référence 12 ;
- une distance et/ou positionnement de l'organe de retrait relativement à la zone de support 18 pour la reproduction des caractéristiques des aspects visuels/esthétiques/structurels et/ou fonctionnelles d'au moins une dimension de la représentation graphique numérique de référence 12 ;
- un durée de positionnement de l'organe de retrait relativement à la zone de support 18 pour la reproduction des caractéristiques des aspects visuels/esthétiques/structurels et/ou fonctionnelles d'au moins une dimension de la représentation graphique numérique de référence 12.

Lors du processus de dépôt de matière, le dispositif de construction 6 notamment de l'organe d'impression et de l'organe de fixation, est alors piloté par l'unité de contrôle 9 du serveur 2 selon ladite au moins une instruction de pilotage comprenant les critères de réalisation tels que :
- une sélection des cartouches comprenant les têtes d'impression nécessaires à la reproduction de la représentation graphique numérique sur la zone de support 18 et ce, en fonction de la matière qu'elles contiennent, en particulier à la reproduction des caractéristiques relatives aux aspects visuels/esthétiques/structurels et/ou fonctionnelles de la représentation graphique numérique de référence 12;
- un déplacement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de référence 12 ;
- une distance et/ou positionnement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de référence 12 ;
- une durée de positionnement de la tête d'impression de chaque cartouche relativement à la zone de support 18 pour la reproduction des caractéristiques des aspects visuels/esthétiques/structurels et/ou fonctionnelles d'au moins une dimension de la représentation graphique numérique de référence 12 ;
- un débit de matière éjecté des têtes d'impression pour la reproduction des caractéristiques des aspects visuels/esthétiques/structurels et/ou fonctionnelles d'au moins une dimension de la représentation graphique numérique de référence 12.

Par la suite, ce procédé comprend une étape d'enlèvement 34 de l'élément de support 16 du système 1 dudit au moins un composant 20 de la pièce d'horlogerie 100 maintenant pourvu de la représentation graphique 17 comprenant l'identifiant du message avant d'être dirigé vers une chaine de montage de la pièce d'horlogerie 100.

Le procédé comprend ensuite une étape de construction 36 de la pièce d'horlogerie 100. Une telle étape 36 comprend une sous-étape d'assemblage 37 de l'ensemble des composants 20 constituant ladite pièce d'horlogerie 100 dont fait partie ledit au moins un composant 20 comprenant la zone de support 18 pourvue de la représentation graphique 17 comprenant l'identifiant du message.

Ensuite, le procédé comprend une étape de diffusion 38 dudit message par le deuxième dispositif électronique 3b du deuxième utilisateur à partir de ladite représentation graphique 17 comprise sur la pièce d'horlogerie 100. Lors de cette étape 38, un tel message est alors diffusé au deuxième utilisateur par l'intermédiaire du module d'affichage 7b et/ou de l'interface de diffusion d'une information sonore. Cette étape 38 comprend une sous-étape de numérisation 39 de la représentation graphique 17 réalisée sur la zone de support 18 à partir du deuxième dispositif électronique 3b. On notera qu'une telle numérisation/scannage peut être en trois dimensions si le deuxième dispositif électronique 3b est équipé d'un module de numérisation 15b comprenant de préférence au moins deux modules de capture d'un flux lumineux 14b. Lors de la réalisation de cette sous-étape 39, l'interface homme-machine IHM de ce deuxième dispositif électronique 3b comprenant notamment l'unité de traitement 5b, le module d'affichage 7b, les modules de capture de flux lumineux et audio 14b, 11b, et l'interface de sélection 8b peut être sollicitée afin d'améliorer la numérisation de cette représentation graphique 17. Cette étape 38 comprend ensuite une sous-étape d'identification 40 du message à diffuser. Lors d'une telle sous-étape d'identification 40, l'unité de traitement 5b de ce deuxième dispositif électronique 3b et/ou l'unité de contrôle 9 du serveur 2 met par exemple en oeuvre :
- lorsque la représentation graphique numérisée 19 constitue l'identifiant du message, un traitement numérique de l'image visant à réaliser une comparaison entre cette représentation graphique numérisée 19 et la représentation graphique numérique de référence 12 afin d'identifier les données numériques relatives au message à diffuser associées à cet identifiant du message ;
- lorsque l'identifiant du message est intégré dans la représentation graphique numérisée 19, un traitement est mis en oeuvre afin d'obtenir l'identifiant du message associé aux données numériques relatives au message à diffuser, un tel traitement vise alors à appliquer à la représentation graphique numérisée 19 un algorithme de décodage adapté.

Cette étape de diffusion 38 comprend par la suite une sous-étape de transmission 41 au deuxième dispositif électronique 3b des données numériques relatives audit message identifié. Lors de cette sous-étape 38 de telles données numériques qui sont comprises de préférence dans la base de données 4 du serveur 2 et qui sont relatives au message à diffuser, sont transmises de la base de données 4 à ce deuxième dispositif électronique 3b dès lors que l'unité de contrôle 9 du serveur 2 a reçu une requête comprenant l'identifiant du message. On notera qu'une telle étape de diffusion 38 peut requérir une identification du deuxième utilisateur avant la diffusion du message.

On remarquera que lors des échanges de données entre les premier et deuxième dispositifs électroniques 3a, 3b avec le serveur 2, le procédé prévoit de préférence l'établissement d'une liaison sécurisée entre ces premier et deuxième dispositifs électroniques 3a, 3b et le serveur 2 et ce, par l'intermédiaire de l'interface et du module de communication.

L'invention porte également un programme d'ordinateur comprenant des instructions de code de programme pour l'exécution des étapes 21 à 41 de ce procédé lorsque ledit programme est exécuté par les unités de contrôle 9 et de traitement 5a, 5b de respectivement du serveur 2 et des premier et deuxième dispositifs électroniques 3a, 3b.

## Revendications

1. Procédé de transmission d'au moins un message par l'intermédiaire d'une pièce d'horlogerie (100), le procédé comprenant les étapes suivantes :
- création (21) du message à transmettre par un premier dispositif électronique (3a) d'un premier utilisateur à partir de données numériques du message notamment résultant d'un traitement d'un flux audio (11a) et/ou d'un flux lumineux capturé par ce premier dispositif électronique (3a) ;
- génération (24) d'une représentation graphique numérique de référence (12) comprenant un identifiant dudit message ;
- réalisation (30) d'une représentation graphique (17) relative à ladite représentation graphique numérique de référence (12) sur/dans une zone de support (18) dudit message définie sur tout ou partie de la pièce d'horlogerie (100), et
- diffusion (38) dudit message par un deuxième dispositif électronique (3b) d'un deuxième utilisateur à partir de ladite représentation graphique (17) comprise sur la pièce d'horlogerie (100).

2. Procédé selon la revendication précédente, **caractérisé en ce que** l'étape de génération (24) comprend une sous-étape de sélection (25) à partir d'une interface homme-machine (IHM) du premier dispositif électronique (3a) d'un modèle de représentation graphique numérique (10) parmi différents modèles (10) affichés sur un module d'affichage (7a) de ce premier dispositif électronique (3a).

3. Procédé selon la revendication précédente, **caractérisé en ce que** l'étape de génération (24) comprend une sous-étape d'application (28) de critères de modification à au moins un paramètre descriptif de la représentation graphique numérique (10) sélectionnée.

4. Procédé selon l'une quelconque des revendications précédentes, **caractérisé en ce que** l'étape de diffusion (38) comprend une sous-étape de numérisation (39) de la représentation graphique (17) réalisée sur/dans la zone de support (18) à partir du deuxième dispositif électronique (3b).

5. Procédé selon la revendication précédente, **caractérisé en ce que** l'étape de diffusion (38) comprend une sous-étape d'identification (40) du message à diffuser.

6. Procédé selon la revendication précédente, **caractérisé en ce que** l'étape de diffusion (38) comprend une sous-étape de transmission (41) au deuxième dispositif électronique (3b) des données numériques du message relatives audit message identifié.

7. Procédé selon l'une quelconque des revendications précédentes, **caractérisé en ce que** l'étape de réalisation (30) comprend une sous-étape de génération (33) par une unité de contrôle (9) du serveur (2) d'au moins une instruction de pilotage d'un dispositif de construction (6) de ladite représentation graphique (17) en fonction de caractéristiques descriptives de la représentation graphique numérique de référence (12).

8. Procédé selon l'une quelconque des revendications précédentes, **caractérisé en ce que** l'étape de réalisation (30) comprend une sous-étape d'édification (34) de la représentation graphique (17) sur/dans la zone de support (18), ladite sous-étape (34) mettant en oeuvre un processus de retrait de matière dans cette zone de support (18) et/ou un processus de dépôt d'au moins une couche de matière sur cette zone de support (18).

9. Procédé selon l'une quelconque des revendications précédentes, **caractérisé en ce qu'**il comprend une étape de construction (36) de la pièce d'horlogerie (100) comportant une sous-étape d'assemblage (37) d'un ensemble de composants (20) constituant ladite pièce d'horlogerie (100) dont fait partie ledit au moins un composant (20) comprenant la zone de support (18) pourvue de la représentation graphique (17).

10. Procédé selon l'une quelconque des revendications précédentes, **caractérisé en ce que** la zone de support (18) est définie sur :
- un seul composant (20) de la pièce d'horlogerie (100) notamment un cadran de la pièce d'horlogerie (100), ou
- plusieurs composants (20) distincts de la pièce d'horlogerie (100).

11. Procédé selon l'une quelconque des revendications précédentes, **caractérisé en ce que** ledit au moins un message est du type audio et/ou vidéo ou encore graphique.

12. Procédé selon l'une quelconque des revendications précédentes, **caractérisé en ce que** la représentation graphique (17) est de type bidimensionnelle ou tridimensionnelle.

13. Système (1) de transmission d'au moins un message par l'intermédiaire d'une pièce d'horlogerie (100), mettant en oeuvre le procédé selon l'une quelconque des revendications précédentes, le système (1) comprenant des premier et deuxième dispositifs électroniques (3a, 3b), un serveur (2) comportant une base de données (4) pourvue d'au moins un modèle de représentation graphique numérique (10) et un dispositif de construction (6) de représentation graphique (17) sur/dans une zone de support (18) du message définie sur tout ou partie de la pièce d'horlogerie (100), les premier et deuxième dispositifs électroniques (3a, 3b) et le dispositif de construction (6) de représentation graphique (17) étant connectés audit serveur (2).

14. Pièce d'horlogerie (100) comprise dans un système selon la revendication précédente comportant une zone de support (18) du message pourvue d'une représentation graphique (17) comprenant un identifiant de ce message.

15. Programme d'ordinateur comprenant des instructions de code de programme pour l'exécution des étapes du procédé selon les revendications 1 à 12 lorsque ledit programme est exécuté par des unités de contrôle et de traitement (9, 5a, 5b) de respectivement du serveur (2) et des premier et deuxième dispositifs électroniques (3a, 3b).
